**Europäisches Patentamt**

**European Patent Office**

**Office européen des brevets**

(19)

(11) Publication number: 0 054 519
A1

(12)

# EUROPEAN PATENT APPLICATION

(21) Application number: 81830040.2

(22) Date of filing: 13.03.81

(51) Int. Cl.³: G 12 B 17/04

(30) Priority: 16.12.80 IT 1221180

(43) Date of publication of application:
23.06.82 Bulletin 82/25

(84) Designated Contracting States:
AT BE CH DE FR GB LI LU NL SE

(71) Applicant: E.M. - ELICOTTERI MERIDIONALI S.p.A.
Via G. Agusta, 1
I-03100 Frosinone(IT)

(72) Inventor: Mele, Domenico
Via Regina Elena, 54
I-03039 Sora (FR)(IT)

(54) Athermic chamber for geometric measure tools calibration.

(57) Small chamber realized in athermic and transparent material inside which are carried out calibrations of tools used for geometric measuring, this specific case concerns parallel plain blocks (commonly called (JOHNSSON) gauge-blocks).

All the operations required for the calibration are performed from the outside of the athermic chamber.

EP 0 054 519 A1

./...

Croydon Printing Company Ltd.

## ATHERMIC CHAMBER FOR GEOMETRIC MEASURE TOOLS CALIBRATION

The subject invention consists of a little chamber, realized in athermic and transparent material, inside which are carried-out calibrations of tools used for geometric measuring.

According to the current norms, all checkings and calibrations must be made with ambient temperatures that reach as much as possible 20.00°C and having a related humidity not exceeding 55%.

Said calibrations need furtherly to be done in comparison with first line (Primary) sample tools that have already been calibrated by a well known international Metrology Institute (in Italy operates the Metrology Institute "G. Colonnetti" of Turin).

In the execution of such operations (this specific case concerns parallel plain steel blocks commonly called JOHANSSON by the inventor name) it is necessary to consider some factors that share in the calibrations realiability.

Among these (good condition first line samples, tools of good reliability, operator's fitness etc.) the most interesting factor is the temperature.

Are available on the market equipments provided with partial thermal maskings in order to avoid errors due to temperature but they do not totally satisfy.

The same body temperature of the operator or operator's hand, or temperature variations that may occur in the measuring spot, are the origin of non-reliable calibrations.

The so called satisfactory condition would be, to have during the checking or calibration, both the sample tool and the one to be examined at the same temperature.

The invention introduced allows to reach such condition.

Inside the chamber as shown on table 1 (axometric view) are located:

1 - the equipment used for the calibrations;

2 - a turnable thermic equalizer plate realized in light alloy whose diameter is about 400 mm., with its thickness of about 20 mm. on whose upper surface were obtained seats in which the gauge-blocks to be examined are placed.

Through the access door (1) opened by the handle (2) on the mentioned plate are located, one beside the other, the sample block and the one to be calibrated (complete series).

After the whole series of gauge-blocks has been positioned the door (1) is closed.

Starting from this point all operations necessary, during the calibration of the gauge-blocks, are performed from the outside of the chamber.

All operations are made by:

a) a pneumatic aspirator made up of (18) (8) (11) (12);

b) using the athermic gloves;

c) changing the control handles (19) of the equipment.

The panel (14) is activated to lock and release the access door (1) which slides on vertical guides.

The hole (5) at hermetic seal allows the passage of the thermocouples wires used to check the chamber inner temperature in different points.

The rubber canoe (6) allows the pneumatic system tube (8) movement, axial and angular.

All the holes made in the chamber wall are necessary for the passage of the various control organs, the seals are assured by rubber gaskets filled with solid vaseline so to avoid air flows.

The pneumatic aspirator (18) (8) (11) (12) is made up of a handle (11) where it is connected a rigid tube (8) through which flows decompressed air outcoming the mains system (12).

This tube, at the end of which is connected an interchangeable air-sucker (18), can move in an axial, angular direction, and rotate aroung its own longitudinal axis.

On the same tube, near the sucker (18) it is located an adjustable balance weight (3), over which it is fitted a pin (9) that allows the operator to rotate the plate so that the gauge-blocks may be taken and put for the exam.

At the moment the operator wishes to take the gauge-block with the air-sucker, he will activate a pedal controlled valve which allows depressed air flow from the mains system to the sucker itself.

To facilitate such operation, at the same moment the operator activates the valve, the electronic sensors of the control equipment arise to let the gauge-blocks be positioned for the exam.

After calibration of every single block, the sample gauge is repositioned in the plate and the one examined in the apposite container (17).

Following the complete calibration of the whole series of maximum 121 gauge-blocks, the access door (1) is reopened, the container with the calibrated blocks is taken out, and once the protective operations have been made they are put back in the apposite cases.

Operating with the system described above (which was tested and approved by technicians of Primary Metrological Institutes both Italians and foreigners) for specific calibrations such as those concerning gauge-blocks with nominal dimensions betwwen 0.5 mm. and 100 mm. included, we are able to reach very accurate figures that bave never been possible before with nominal mechanic systems now available.

L E G E N D

| | |
|---|---|
| A | Sliding Door |
| B | Door Opening Control Panel |
| C | Balance Weight |
| D-D1 | Guides |
| E | Thermocouples Wires Passage |
| F | Rubber Gaskets |
| G-G1 | Gloves |
| M | Handle |
| S | Gauge-Blocks Container |
| T | Air-Sucker |
| U | Handle |
| V | Tools Container |
| H | Rigid Tube |
| I | Turnable Plate Adjusting Stick |

C  L  A  I  M  S

1 - Total thermal masking both of the equipment and single
    tools during calibration operations.

2 - Possibility to perform all operations required during the
    calibration from the outside of the athermic chamber in
    order to avoid variations of temperature to the whole system.

3 - Turnable plate used to accomodate the gauge-blocks and as
    their thermal equalizer.

4 - Pneumatic aspiration system for gauge-blocks with a nominal
    length up to 100 mm. (modification made to the systems available
    on the market which were satisfactory only for blocks with a
    max nominal length of 6 mm.).

5 - General calibration system.

450 mm.

VISTA ANTERIORE

FRONT VIEW

750 mm.

570 mm.

VISTA dall'ALTO

UPPER SIDE VIEW

TABLE 2 of 3

VISTA LATERALE DESTRA

RIGHT SIDE VIEW

TABLE 3 of 3

**DECLARATION**

which under Rule 45 of the European Patent Convention shall be considered, for the purpose of subsequent proceedings, as the European search report

European Patent Office

0054519
Application number

EP 81 83 0040

| The Search Division considers that the present European patent application does not comply with the provisions of the European Patent Convention to such an extent that it is not possible to carry out a meaningful search into the state of the art on the basis of all claims.<br>Reason:<br><br>All claims appear obscure and further do not appear to define a particular monopoly which is sought. | CLASSIFICATION OF THE APPLICATION (Int. Cl.³)<br><br>G 12 B 17/04 |
|---|---|

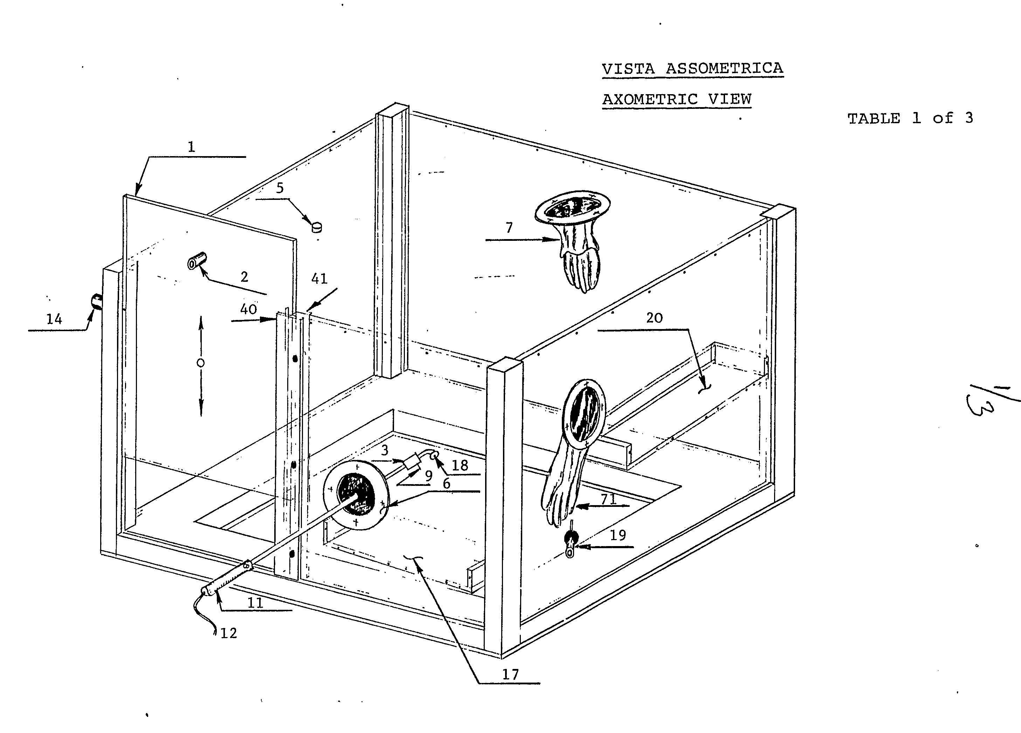

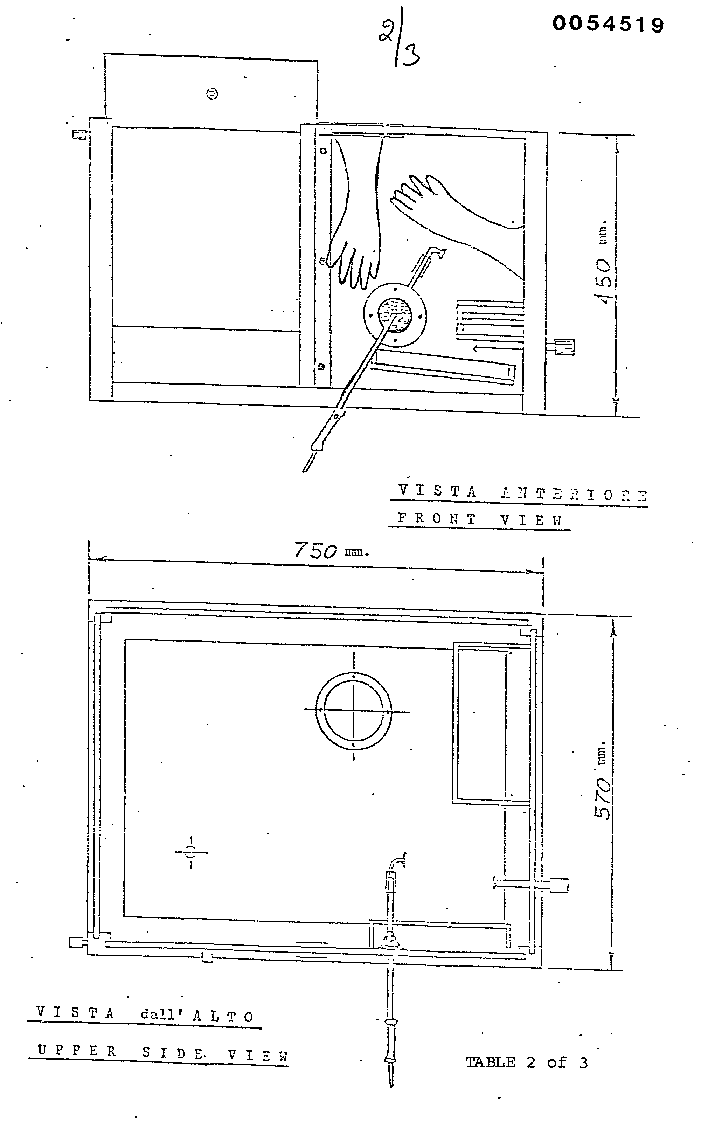

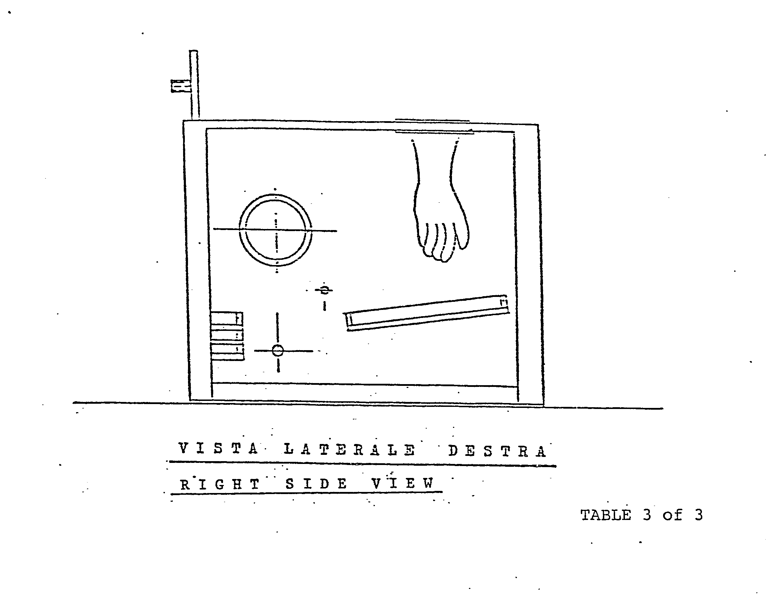

| Place of search | Date of completion of the search | Examiner |
|---|---|---|
| The Hague | 26-03-1982 | LLOYD |

EPO Form 1504   06.78